# EUROPEAN PATENT APPLICATION

(11) **EP 4 763 626 A1**
(43) Date of publication of application: **24.06.2026**
(21) Application number: 25220348.4
(22) Date of filing: 03.12.2025
(51) Int. Cl.: B60R 16/02, F16B 2/08, F16B 21/08

(54) **FIXING MEMBER FOR VEHICLE**

(30) Priority: 18.12.2024 JP 2024221507
(71) Applicant: Daiwa Kasei Industry Co., Ltd, Okazaki-shi, Aichi 444-0004 (JP); Toyota Jidosha Kabushiki Kaisha, Toyota-shi, Aichi-ken 471-8571 (JP)
(72) Inventor: ITO, Yusuke, Okazaki-shi, Aichi, 444-0004 (JP); OTAKE, Ikuyoshi, Toyota-shi, Aichi-ken, 471-8571 (JP); ICHIKI, Kentaro, Toyota-shi, Aichi-ken, 471-8571 (JP); IWAIHARA, Reiji, Toyota-shi, Aichi-ken, 471-8571 (JP)
(74) Representative: Winter, Brandl - Partnerschaft mbB

(57) **Abstract**

In a fixing member, for a vehicle, that is engaged and fixed with an insertion engagement part inserted into a through hole of a plate-shaped member, the fixing member for a vehicle is allowed to be more easily and reliably detached from the through hole. In a fixing member 10 for a vehicle in which, by inserting a support column 11 and elastic locking pieces 12 into a through hole 101 of a plate-shaped member 100 for a vehicle from the upper end side of the support column 11, the elastic locking pieces 12 lock a surrounding portion of the through hole 101 from the far side in an insertion direction I and the distal end having an annular shape of a contact main portion 13A annularly contacts the surrounding portion of the through hole 101 from the near side in the insertion direction I, whereby the fixing member 10 is engaged and fixed to the plate-shaped member 100, a dish-like contact portion 13 is provided with a bent portion 13B extending obliquely downward from the distal end of the contact main portion 13A, and a reinforcing rib 13C formed in a projecting manner so as to extend across lower surfaces 13a, 13b thereof.

## Description

### BACKGROUND OF THE INVENTION

### Field of the Invention

The invention relates to a fixing member for a vehicle.

### Description of Related Art

There is a fixing member, for a vehicle, for fixing a wire harness to a vehicle body side. This fixing member is formed as a resin injection-molded article including: a holding part for holding a wire harness; and an insertion engagement part to be inserted into a through hole of a plate-shaped member (vehicle panel material) on the vehicle body side to be engaged and assembled therewith (see Japanese Laid-Open Patent Publication No. 2024-57767).

The insertion engagement part is provided with: a support column; elastic locking pieces each extending from the upper end side toward the lower end side of the support column; and a dish-like contact portion radially extending obliquely upward and outward in the radial direction of the support column from the lower end side of the support column so as to surround the support column. When the support column and the elastic locking piece are inserted into the through hole of the plate-shaped member from the upper end side of the support column, the elastic locking pieces pass through the through hole with inward elastic deformation approaching the support column, and when the elastic locking pieces reach a predetermined engagement position (predetermined engagement depth), the elastic locking pieces elastically return. Due to this elastic return, the elastic locking pieces come into a locking state of locking a surrounding portion of the through hole from the far side in the insertion direction, and the dish-like contact portion comes into a contact state of annularly contacting the surrounding portion of the through hole from the near side in the insertion direction. Accordingly, the fixing member comes into an engagement and fixation state where the plate-shaped member is sandwiched in the insertion direction by the elastic locking pieces and the dish-like contact portion.

In such an engagement and fixation state, in order to detach the fixing member from the through hole in the plate-shaped member, for example, a jig such as a flat-blade screwdriver is inserted between the plate-shaped member and the dish-like contact portion, and a projecting distal end portion of each elastic locking piece projecting downward from the through hole is pressed toward the support column side to become elastically deformed. Accordingly, engagement of the elastic locking piece is disengaged, and thus, the fixing member can be pulled out in a direction opposite to the insertion direction. Japanese Laid-Open Patent Publication No. 2024-57767 describes a technology in which a bent shape is provided to the dish-like contact portion to facilitate insertion of the jig.

However, when disengagement with a jig was tried by using the technology of Japanese Laid-Open Patent Publication No. 2024-57767, there were cases where the jig could not be inserted between the plate-shaped member and the dish-like contact portion. This state tends to occur in the case of a jig (such as a middle or large-sized flat-blade screwdriver) whose distal end is slightly thick.

An object of the invention is to allow, in a fixing member, for a vehicle, that is engaged and fixed with an insertion engagement part inserted into a through hole of a plate-shaped member, the fixing member for a vehicle to be more easily and reliably detached from the through hole.

### SUMMARY OF THE INVENTION

A fixing member for a vehicle for attaining the aforementioned object includes:
a support column extending in an up-down direction;
elastic locking pieces each extending from an upper end side to a lower end side of the support column; and
a dish-like contact portion including a contact main portion, the contact main portion having a dish-like shape and radially extending obliquely upward and outward from the lower end side of the support column so as to surround the support column, wherein
by inserting the support column and the elastic locking pieces into a through hole of a plate-shaped member for a vehicle from the upper end side of the support column, the elastic locking pieces pass through the through hole with elastic deformation approaching the support column, and when the elastic locking pieces reach a predetermined engagement depth, the elastic locking pieces elastically return, and due to this elastic return, the elastic locking pieces lock a surrounding portion of the through hole from a far side in an insertion direction and a distal end having an annular shape of the contact main portion annularly contacts the surrounding portion of the through hole from a near side in the insertion direction, thereby establishing an engagement and fixation state where the plate-shaped member is sandwiched from the far side and the near side in the insertion direction,
the elastic locking pieces each include a downwardly extending portion passing through the through hole and extending downward in the engagement and fixation state, and
the dish-like contact portion includes
   a bent portion extending obliquely downward and outward from the distal end of the contact main portion in a direction that is orthogonal to at least the up-down direction and that extends from the support column toward the downwardly extending portion, and
   a reinforcing rib formed in a projecting manner at lower surfaces of both the contact main portion and the bent portion, so as to extend across the lower surfaces.

According to the above configuration, when a jig is inserted between the plate-shaped member and the bent portion of the dish-like contact portion, the force is transmitted not only to the bent portion (bent shape) but also to the contact main portion, and thus, the contact main portion is also deflected together with the bent portion. Thus, insertion of the jig is facilitated and reliably performed.

The reinforcing rib can be configured to be formed from the bent portion to an intermediate position of the contact main portion and not to be formed beyond the intermediate position.

Accordingly, when a jig is inserted between the plate-shaped member and the bent portion of the dish-like contact portion, the dish-like contact portion is deflected with the above intermediate position in the contact main portion serving as a fulcrum, and thus is easily deflected. Thus, insertion of the jig is more facilitated.

The fixing member for a vehicle can be configured to include
a base portion to which a lower end of the support column and an inner-side lower end of the contact main portion are coupled, wherein
in the base portion, at a connection position where the base portion is connected to the contact main portion, a groove portion recessed to the support column side is formed on a lower side with respect to the connection position, and
the groove portion extends in a width direction orthogonal to both the up-down direction and a direction extending from the support column toward the downwardly extending portion.

Accordingly, when a jig is inserted between the plate-shaped member and the bent shape of the dish-like contact portion, the dish-like contact portion is easily deflected with the root (proximal end) thereof serving as a fulcrum. Thus, insertion of the jig is more facilitated.

### BRIEF DESCRIPTION OF THE DRAWINGS

FIG. 1A is a perspective view of a fixing member of a first embodiment of the invention, seen from the upper side;
FIG. 1B is a perspective view of the fixing member in FIG. 1A, seen from the lower side;
FIG. 2 is a perspective view showing a use state of the fixing member in FIG. 1A;
FIG. 3 is a cross-sectional view of FIG. 2, seen from the side-surface side;
FIG. 4 is a partially-enlarged rear view showing the portion above an A-A cross-section in FIG. 1B;
FIG. 5 is a partially-enlarged front view showing the portion above an A-A cross-section in FIG. 1A;
FIG. 6 is a first partially-enlarged perspective view showing the portion above a B-B cross-section in FIG. 4;
FIG. 7 is a second partially-enlarged perspective view showing the portion above the B-B cross-section in FIG. 4;
FIG. 8 is a right side view of FIG. 6;
FIG. 9 is a left side view of FIG. 6;
FIG. 10 is a plan view of FIG. 6;
FIG. 11 is a bottom view of FIG. 6;
FIG. 12 is a cross-sectional view describing a method for engaging and fixing a plate-shaped member and the fixing member in FIG. 1A;
FIG. 13 is a first cross-sectional view describing a method for releasing an engagement and fixation state of the plate-shaped member and the fixing member in FIG. 1A;
FIG. 14 is a second cross-sectional view following FIG. 13;
FIG. 15 is a third cross-sectional view following FIG. 14;
FIG. 16 is a cross-sectional view corresponding to FIG. 13, for describing a conventional release method;
FIG. 17 is a partial cross-sectional view obtained by cutting a portion C in FIG. 4 at a D-D cross-section in FIG. 10;
FIG. 18 is a partial cross-sectional view obtained by cutting the portion C in FIG. 4 at the B-B cross-section in FIG. 4;
FIG. 19 is a cross-sectional view obtained by cutting a fixing member of a second embodiment of the invention at the same position as the B-B cross-section in FIG. 4;
FIG. 20 is a cross-sectional view obtained by cutting a fixing member of a third embodiment of the invention at the same position as the B-B cross-section in FIG. 4;
FIG. 21 is a cross-sectional view obtained by cutting a fixing member of a fourth embodiment of the invention at the same position as the B-B cross-section in FIG. 4;
FIG. 22A is a perspective view of a use state of a fixing member of a first modification of the invention, seen from the upper side;
FIG. 22B is a perspective view of the fixing member in FIG. 22A, seen from the lower side;
FIG. 22C is a side view of the fixing member in FIG. 22B;
FIG. 22D is a plan view of FIG. 22B;
FIG. 23A is a first perspective view showing a fixing member of a second modification of the invention;
FIG. 23B is a second perspective view of the fixing member in FIG. 23A;
FIG. 23C is a plan view of the fixing member in FIG. 23A;
FIG. 23D is a front view of FIG. 23A;
FIG. 23E is a rear view of FIG. 23A; and
FIG. 24 is a cross-sectional view describing a use method of a functional part included in the fixing member in FIG. 23A to FIG. 23E.

### DETAILED DESCRIPTION

Hereinafter, a first embodiment will be described with reference to the drawings.

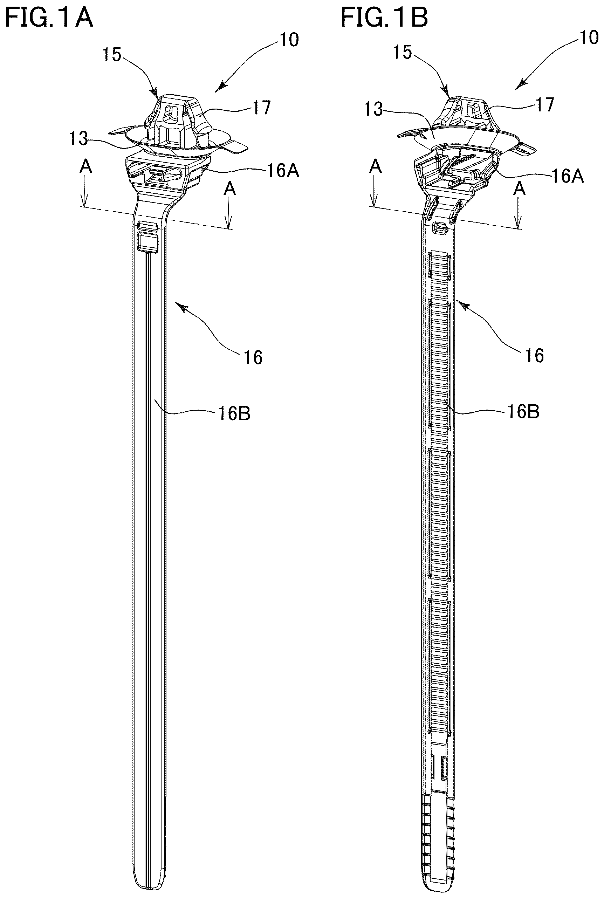

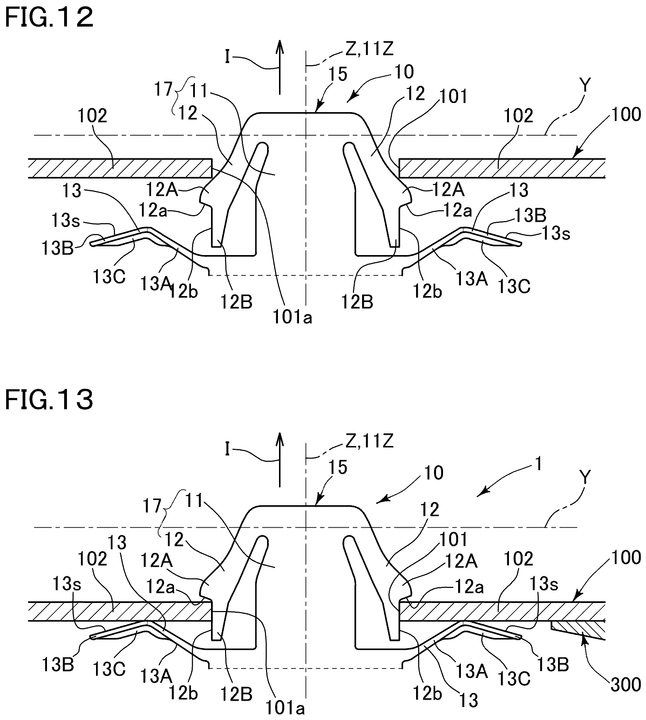

A fixing member 10, for a vehicle, of the first embodiment is a resin molded article, and as shown in FIG. 1 to FIG. 5, includes: an assembly fixation part 15 which is inserted and fixed in a through hole 101 (see FIG. 12 and FIG. 13) of a plate-shaped member 100 for a vehicle; and a functional part 16 which is provided below the assembly fixation part 15 and has a predetermined function. Accordingly, the fixing member 10 can allow the functional part 16 to function in a state of being fixed to the plate-shaped member 100.

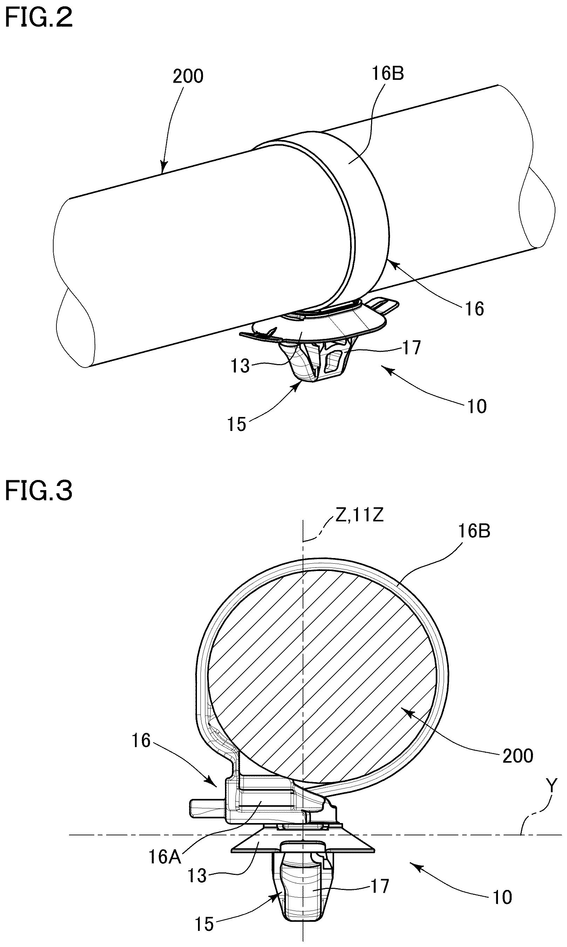

The functional part 16 here is provided as a holding part for a longitudinal routing material. Specifically, as shown in FIG. 2 and FIG. 3, the functional part 16 is a known binding part (e.g., wire harness holding part) including a belt portion 16B for surrounding the outer periphery of a longitudinal routing material 200 (e.g., wire harness), and a buckle portion 16A capable of receiving and fixing the belt portion 16B from the distal end side of the belt portion 16B.

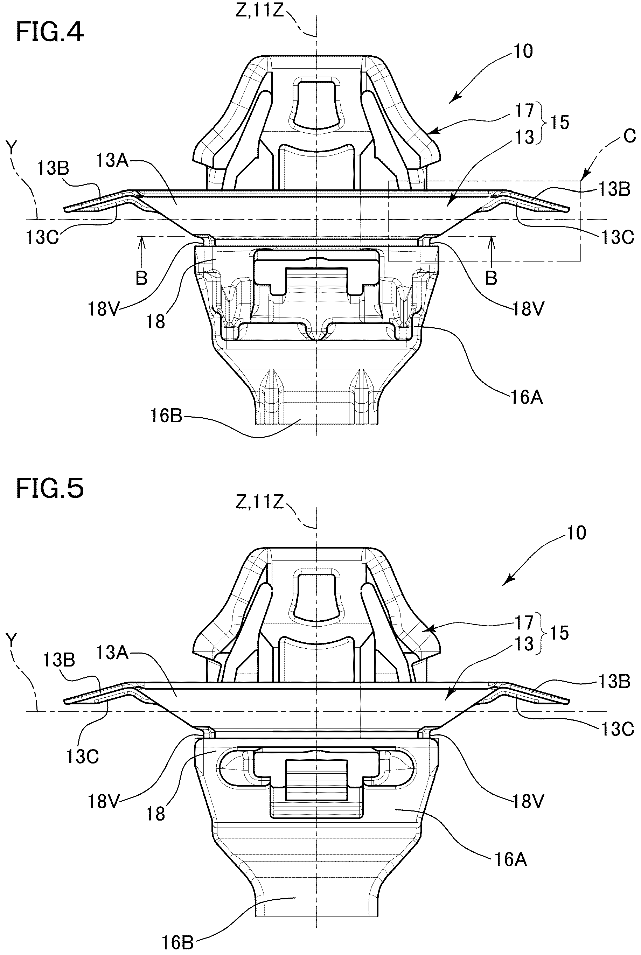

As shown in FIG. 4 and FIG. 5, the assembly fixation part 15 includes an insertion engagement part 17 and a dish-like contact portion 13.

As shown in FIG. 12 and FIG. 13, the insertion engagement part 17 is inserted from the upper end thereof into the through hole 101 of the plate-shaped member 100, and when having been inserted to a predetermined engagement depth (predetermined engagement position), locks the plate-shaped member 100 from the far side in an insertion direction I. The dish-like contact portion 13 comes into contact with the plate-shaped member 100 from the near side in the insertion direction I when the insertion engagement part 17 reaches the predetermined engagement depth. Accordingly, a fixing structure 1 in which the plate-shaped member 100 is sandwiched by the insertion engagement part 17 and the dish-like contact portion 13 is formed, and the fixing member 10 comes into an engagement and fixation state (see FIG. 13) of being engaged and fixed to the plate-shaped member 100.

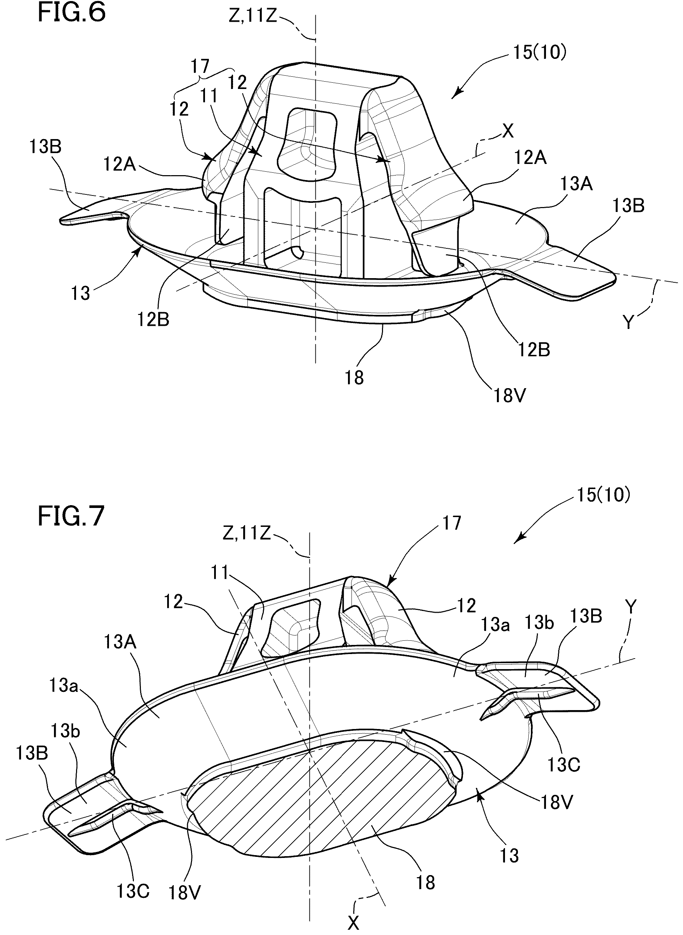

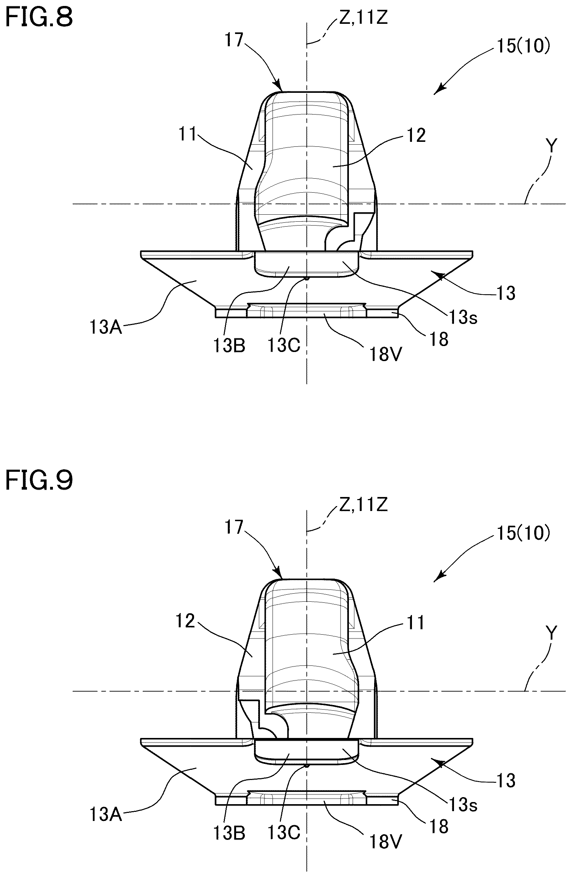

As shown in FIG. 6 to FIG. 10, the insertion engagement part 17 has an axis 11Z extending in an up-down direction Z, and includes one or more elastic locking pieces 12 (elastic locking portion) around the axis 11Z. When the insertion engagement part 17 is inserted into the through hole 101, the elastic locking piece 12 is pressed against a through hole inner wall surface 101a (see FIG. 13) to be elastically deformed inward so as to approach the axis 11Z, and when the insertion engagement part 17 is inserted to the predetermined engagement depth, the elastic locking piece 12 elastically returns outward so as to be away from the axis 11Z. The insertion engagement part 17 includes: a locking portion 12A which locks, due to elastic return thereof, a through hole surrounding portion 102 from the far side in the insertion direction I; and a downwardly extending portion 12B which extends downward from the through hole 101 during the locking (see FIG. 13).

As shown in FIG. 6 and FIG. 7, the insertion engagement part 17 of this embodiment includes: a support column 11 extending in the up-down direction Z; and elastic locking pieces 12, 12 paired such that the support column 11 is interposed therebetween from the left and the right (in a left-right direction Y), and each extending from the support column upper end side toward the support column lower end side.

Here, the mutually orthogonal up-down direction Z and left-right direction Y, and a front-back direction X orthogonal thereto are directions that are set for the sake of convenience to describe a three-dimensional shape, and are not restricted to the meaning of up-down, left-right, and front-back, such as a meaning that, for example, the direction in which the support column 11 (the axis 11Z) extends in the up-down direction Z has to coincide with the gravity direction.

As shown in FIG. 6 to FIG. 11, the dish-like contact portion 13 includes a contact main portion 13A, a bent portion 13B, and a reinforcing rib 13C.

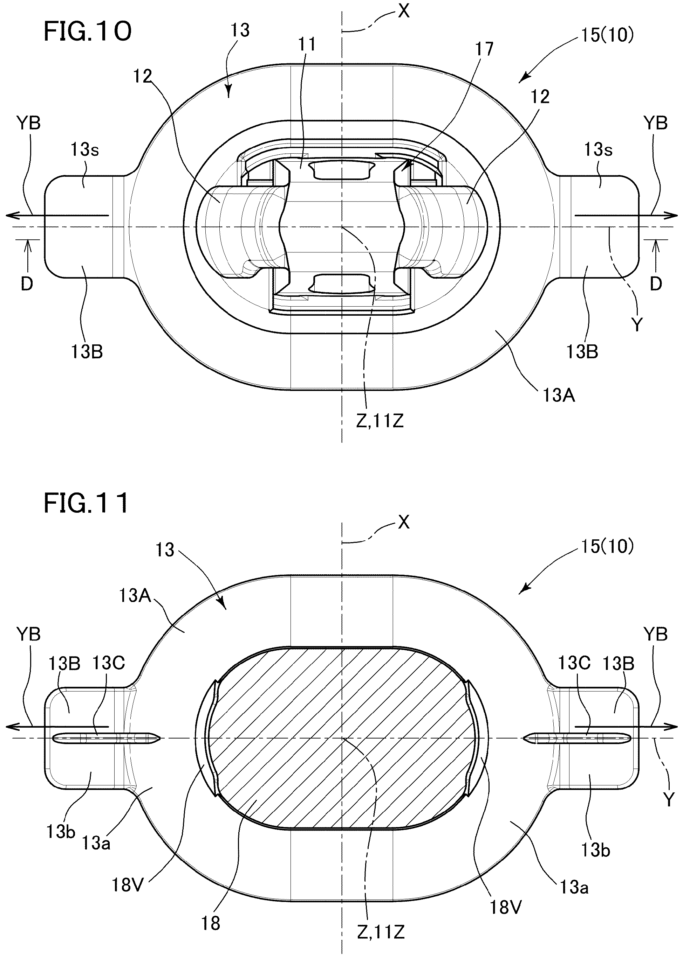

As shown in FIG. 6 and FIG. 7, the contact main portion 13A (dish-like main portion) has a dish-like (annular, skirt-like) shape that radially extends (in a radial manner) obliquely upward and outward from a lower end portion of the insertion engagement part 17, and the distal end of the contact main portion 13A annularly contacts the through hole surrounding portion 102 of the plate-shaped member 100 from the near side in the insertion direction I in the engagement and fixation state (see FIG. 13). The contact main portion 13A of this embodiment has a substantially elliptical shape (oval shape: including an egg shape, an oblong circular shape, an elliptical shape, a rounded rectangular shape, etc.) whose major-axis direction is the alignment direction (here, the left-right direction Y) of the paired elastic locking pieces 12, 12, when seen in the direction of the axis 11Z (see FIG. 10 and FIG. 11). The contact main portion 13A radially extends obliquely upward and outward. The contact main portion 13A becomes gradually thinner toward the upper distal end side.

As shown in FIG. 6 to FIG. 11, the bent portion 13B extends obliquely downward and outward from the distal end of the contact main portion 13A, in an outward direction YB (hereinafter, also referred to as a bent portion extending direction YB: see FIG. 10 and FIG. 11) that is orthogonal to at least the up-down direction Z (the axis 11Z) and that extends from the support column 11 (the axis 11Z) toward the downwardly extending portion 12B. The bent portion 13B here is formed on the outer side (the side away from the support column 11) with respect to the downwardly extending portion 12B in the bent portion extending direction YB, and extends so as to be bent obliquely downward and outward from a section (section close to the downwardly extending portion 12B), in the distal end of the contact main portion 13A having an annular shape, that corresponds to the downwardly extending portion 12B. In this embodiment, a plurality (here, two) of the bent portions 13B are provided at a predetermined interval (here, equal intervals) around the support column 11 (the axis 11Z). Each bent portion 13B extends, in the bent portion extending direction YB, from the annular distal end of the contact main portion 13A, and forms a plate-like and rectangular piece.

As shown in FIG. 7, the reinforcing rib 13C is formed as a wall portion that projects downward at lower surfaces 13a, 13b of both the contact main portion 13A and the bent portion 13B, so as to extend across the lower surfaces 13a, 13b. The reinforcing rib 13C is formed as a wall portion extending from the contact main portion 13A to the bent portion 13B while being bent along the lower surfaces 13a, 13b.

As shown in FIG. 7 and FIG. 11, the reinforcing rib 13C of this embodiment is formed from the bent portion 13B to an intermediate position of the contact main portion 13A, and is not formed in the contact main portion 13A beyond the intermediate position. Meanwhile, in the bent portion 13B, the reinforcing rib 13C of this embodiment is formed from the connection portion to the contact main portion 13A up to substantially the distal end position of the bent portion 13B. The reinforcing rib 13C is formed so as to be longer in the bent portion 13B than in the contact main portion 13A. The reinforcing rib 13C of this embodiment extends straight at the center in the width direction (here, coincides with the direction X) of the bent portion 13B extending in a plate-like and rectangular shape when seen in the direction of the axis 11Z.

Here, a method of fixing the fixing member 10 to the plate-shaped member 100 is described.

As shown in FIG. 12, the assembly fixation part 15 is inserted and fixed in the through hole 101 by inserting (in the insertion direction I) the support column 11 and the elastic locking pieces 12, 12 forming the insertion engagement part 17, into the through hole 101 of the plate-shaped member 100 from the upper end side (support column upper end side). Upon insertion, the paired elastic locking pieces 12, 12 pass through the through hole 101 while narrowing the width of the insertion engagement part 17 with inward elastic deformation approaching the support column 11, and when the elastic locking pieces 12, 12 pass through the through hole 101 and reach the predetermined engagement depth (predetermined engagement position), the elastic locking pieces 12, 12 elastically return (do not have to fully return to a natural state) and widen. At this time, as shown in FIG. 13, the downwardly extending portions 12B extend downward with respect to the plate-shaped member 100 through the inside of the through hole 101, press outward the through hole inner wall surface 101a, and come into a locking state (pull-out prevention state) where the locking portions 12A lock the through hole surrounding portion 102 from the upper side (far side in the insertion direction I).

Meanwhile, the dish-like contact portion 13 is not inserted into the through hole 101, and comes into a pressing state (contact state) of annularly contacting and pressing the through hole surrounding portion 102 from the lower side (near side in the insertion direction I) (see FIG. 13). Specifically, the annular end portion at an end of the contact main portion 13A extending obliquely upward and outward comes into contact with the plate-shaped member 100 to be pressed downward, thereby coming into a state of being elastically deformed. As a result, the plate-shaped member 100 comes into an engagement and fixation state of being sandwiched (specifically, compressed) by the fixing member 10 (12A, 13A) from the upper and lower sides (from the near side and the far side in the insertion direction I) at the surrounding portion 102 of the through hole 101. Accordingly, the fixing structure 1 in which the fixing member 10 is fixed to the plate-shaped member 100 is formed.

As shown in FIG. 13, the locking portion 12A here is formed so as to bulge to the outer side (the side away from the axis 11Z), and a downward-facing surface 12a of the bulge portion forms a locking surface for locking the through hole surrounding portion 102 from the upper side in the engagement and fixation state. Meanwhile, the downwardly extending portion 12B extends downward from the inner side (the side toward the axis 11Z) of the locking portion 12A so as to form the distal end (lower end) of the elastic locking piece 12, to project downward through the through hole 101. An opposing surface 12b opposing the through hole inner wall surface 101a and facing the outer side forms a pressing surface for pressing the through hole inner wall surface 101a outward in the engagement and fixation state.

Here, a method of detaching the fixing member 10 from the plate-shaped member 100 is described.

As shown in FIG. 13, an upper surface 13s of each bent portion 13B in the engagement and fixation state faces the plate-shaped member 100 in the insertion direction I (the up-down direction Z) with a gap therebetween. This upper surface 13s forms an inclined surface extending obliquely downward and outward in a direction opposite to the insertion direction I. Meanwhile, with respect to each of the elastic locking pieces 12, 12, in the engagement and fixation state, the downwardly extending portion 12B forming the lower end extends downward with respect to the plate-shaped member 100 through the through hole 101, is hidden inside the dish-like contact portion 13 (the contact main portion 13A), and is not exposed below the plate-shaped member 100.

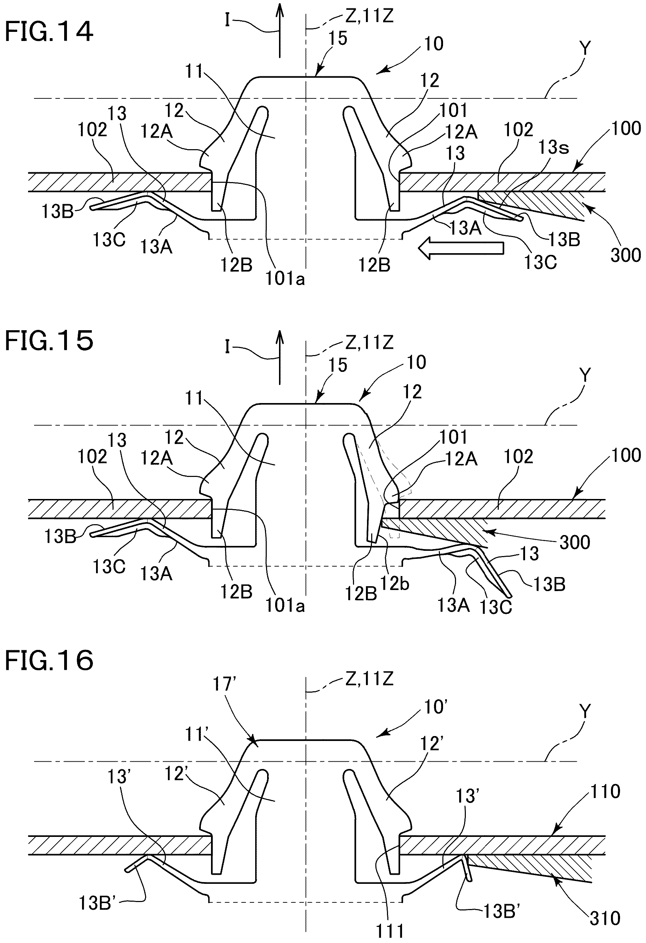

As shown in FIG. 14 and FIG. 15, when a jig 300 is brought into contact with this downwardly extending portion 12B (locking release portion) to press the downwardly extending portion 12B toward the support column 11 side (the axis 11Z side), the locking state (pull-out prevention state) of each of the elastic locking pieces 12, 12 by the locking portion 12A is released (see FIG. 15), so that it is possible to pull out the assembly fixation part 15 from the through hole 101 in a direction opposite to the insertion direction I.

However, in order to cause the jig 300 to reach the downwardly extending portion 12B, the jig 300 has to be caused to enter the inside of the dish-like contact portion 13 while widening the space between the dish-like contact portion 13 in the pressing state and the plate-shaped member 100 (the surrounding portion 102). In the fixing member 10 of the invention, since the bent portion 13B is formed in the dish-like contact portion 13, the jig 300 can be inserted between the dish-like contact portion 13 and the plate-shaped member 100 (the surrounding portion 102) so as to slide on the upper surface 13s of the bent portion 13B, and thus, the space therebetween can be easily widened (FIG. 14→FIG. 15). After the space has been widened, if the jig 300 is caused to enter as is in the direction in which the jig 300 has been inserted, the downwardly extending portion 12B present ahead of the jig 300 can be pressed to the inner side (the axis 11Z side) (see FIG. 15). Accordingly, the locking state (pull-out prevention state) by the locking portion 12A is released, and the assembly fixation part 15 can be pulled out from the through hole 101 in a direction opposite to the insertion direction I.

However, when the jig 300 slides on the upper surface 13s of the bent portion 13B, the jig 300 causes a downwardly pressing force to act on the bent portion 13B. In a conventional structure, only the bent portion 13B may bend starting at the connection portion (bent top portion) to the contact main portion 13A, which may result in failure of insertion of the jig 300. That is, as shown in FIG. 16, in an engagement and fixation state where an insertion engagement part 17' (support column 11', elastic locking piece 12') of a fixing member 10' is inserted in a through hole 111 of a plate-shaped member 110 and the plate-shaped member 110 is sandwiched by the elastic locking piece 12' and a dish-like contact portion 13', when a jig 310 is inserted between the plate-shaped member 110 and a bent portion 13B' of the dish-like contact portion 13', only the bent portion 13B' is largely deflected and the jig 310 cannot be inserted between the plate-shaped member 110 and the dish-like contact portion 13' in some cases. However, in this embodiment, the reinforcing rib 13C is formed at the lower surface 13b, 13a (see FIG. 7) from the bent portion 13B to the contact main portion 13A, so as to extend across them. Therefore, bending of only the bent portion 13B can be prevented, and the entirety from the bent portion 13B to the contact main portion 13A can be reliably deflected downward.

In addition, as shown in FIG. 4 to FIG. 9, the fixing member 10 includes a base portion 18 which couples both of the lower end of the support column 11 (the insertion engagement part 17) and the inner-side lower end (proximal end) of the contact main portion 13A. Here, an upper end portion of the functional part 16 corresponds to this base portion 18.

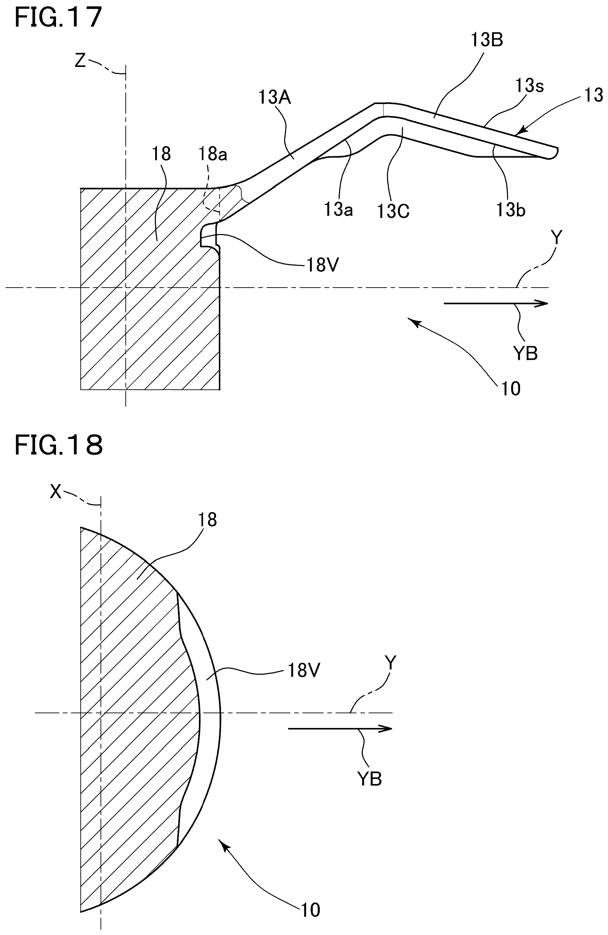

In the base portion 18, as shown in FIG. 17, at the connection position (connection surface 18a) where the base portion 18 is connected to the contact main portion 13A, a groove portion 18V recessed to the inside of the base portion 18 (the axis 11Z side) is formed on the lower side with respect to the connection position. As shown in FIG. 18, this groove portion 18V extends in a width direction X (the front-back direction X) orthogonal to both the up-down direction Z and the bent portion extending direction YB. Accordingly, the entirety from the bent portion 13B to the contact main portion 13A can be easily deflected downward.

The groove portion 18V is formed only in a circumferential section on the side, in the outer peripheral surface of the base portion 18, that corresponds to the bent portion 13B, and is not formed in a circumferential section that does not correspond to the bent portion 13B.

The locking state (pull-out prevention state) by the locking portion 12A to the plate-shaped member 100 in this embodiment may be released by pressing one elastic locking piece 12 inward by the jig 300 as shown in FIG. 13 to FIG. 15, or may be released by simultaneously pressing both elastic locking pieces 12, 12 inward.

Although the first embodiment of the invention has been described above, the first embodiment is merely illustrative, the invention is not limited thereto, and various modifications such as additions and omissions may be made on the basis of the knowledge of a person skilled in the art without departing from the scope of the claims.

For example, the number of elastic locking pieces 12 may be one as long as the elastic locking piece 12 can be inserted into the through hole 101 of the plate-shaped member 100 together with the support column 11, to be engaged and fixed.

The functional part 16 is not limited to a holding part for a longitudinal routing material.

Hereinafter, embodiments different from the first embodiment and various modifications will be described. Parts having the same functions as those in the first embodiment are denoted by the same reference characters, and detailed description thereof is omitted. In addition, the various embodiments and modifications can be combined to be implemented as appropriate as long as no technological contradiction arises.

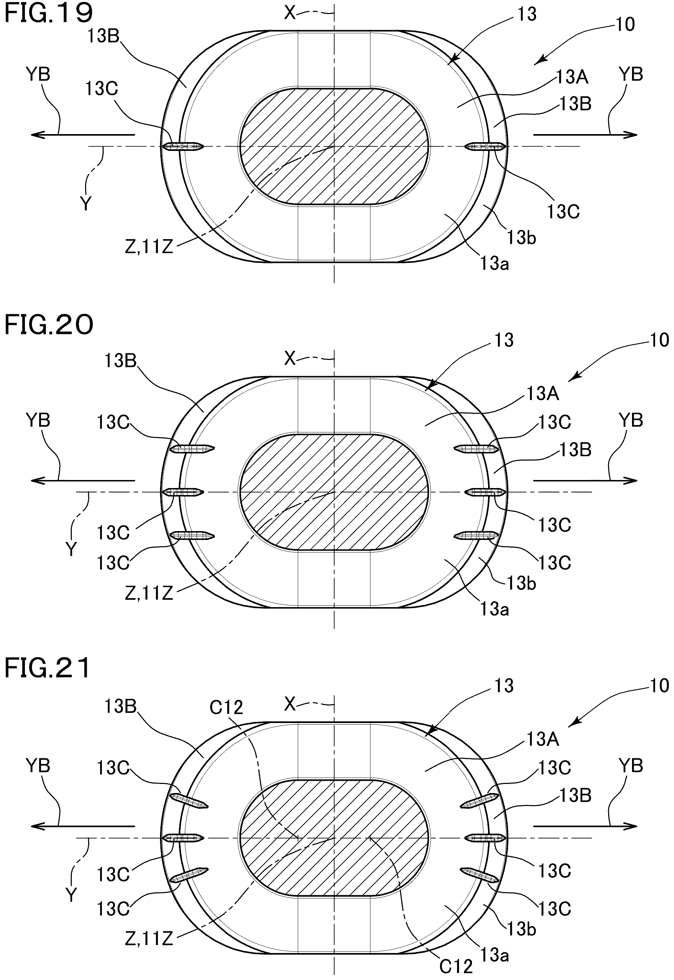

A second embodiment will be described with reference to FIG. 19.

As shown in FIG. 19, in a fixing member 10 of the second embodiment, when seen in the direction (up-down direction Z) of the axis 11Z, a contact main portion 13A has a substantially elliptical shape, while a bent portion 13B is formed such that, on the side of each elastic locking piece 12 (downwardly extending portion 12B) in the outer edge of the contact main portion 13A having the substantially elliptical shape, the bent portion 13B extends along the outer edge and is wider in the width direction X than in the first embodiment. The bent portion 13B here has a curved shape in which the length (width in the direction Y) in the center portion in the width direction X is longest and the length becomes shorter toward the outer side in the width direction X. Meanwhile, the reinforcing rib 13C extends in a straight manner along the bent portion extending direction YB (here, outward in the left-right direction Y) at the center in the width direction X.

A third embodiment will be described with reference to FIG. 20.

In a fixing member 10 of the third embodiment, when seen in the direction (the up-down direction Z) of the axis 11Z, a contact main portion 13A and a bent portion 13B are formed in a similar manner to that in the second embodiment, as shown in FIG. 20. Meanwhile, a plurality (here, three) of reinforcing ribs 13C are provided. The reinforcing ribs 13C are each formed in a straight manner, and extend parallel to each other along the bent portion extending direction YB (here, outward in the left-right direction Y).

A fourth embodiment will be described with reference to FIG. 21.

In a fixing member 10 of the fourth embodiment, when seen in the direction (the up-down direction Z) of the axis 11Z, a contact main portion 13A and a bent portion 13B are formed in a similar manner to that in the second embodiment, as shown in FIG. 21. Meanwhile, a plurality (here, three) of reinforcing ribs 13C are provided. The reinforcing ribs 13C are each formed in a straight manner and radially extend with a center C12 being a predetermined position on the axis 11Z side with respect to the bent portion 13B.

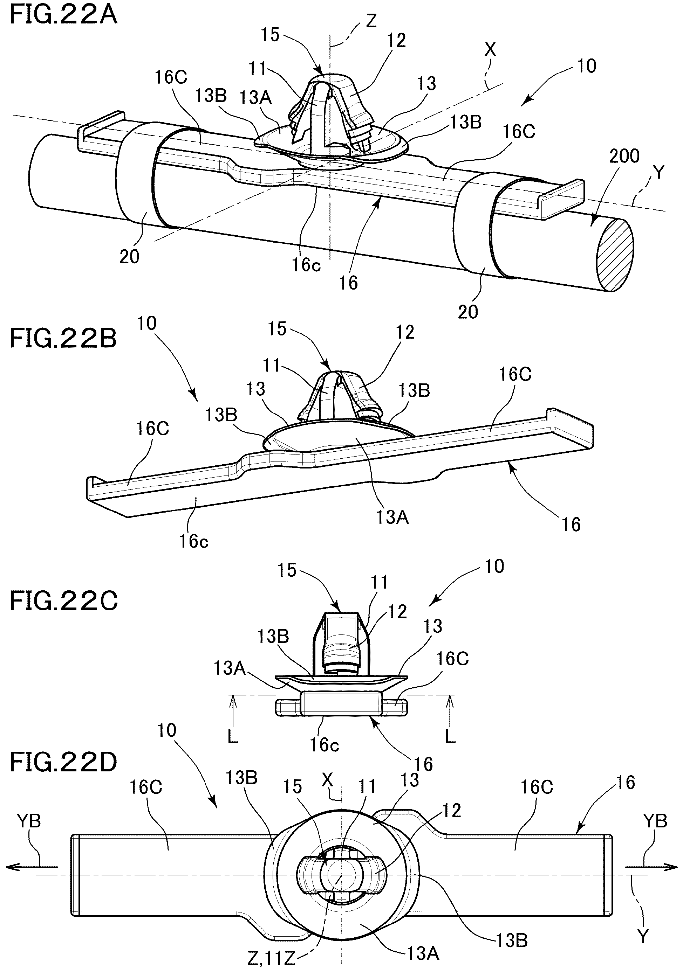

A first modification of the first to fourth embodiments will be described with reference to FIG. 22A to FIG. 22D.

A contact main portion 13A of a fixing member 10 of the first modification has a perfectly circular shape (here, perfectly circular) (see FIG. 22D) when seen in the direction of the axis 11Z, and bent portions 13B are respectively provided at both ends in the alignment direction (here, the left-right direction Y) of the paired elastic locking pieces 12, 12. The reinforcing rib 13C can be formed in the same shape as that of any one of the second to fourth embodiments (FIG. 19 to FIG. 21). The bent portion 13B and the reinforcing rib 13C may be formed as in the first embodiment (FIG. 11).

A functional part 16 of the fixing member 10 of the first modification is a holding part for the longitudinal routing material 200 (e.g., wire harness). This functional part 16 includes plate-shaped sleeve portions 16C, 16C extending from the lower end of the assembly fixation part 15 in a predetermined direction orthogonal to the up-down direction Z. The longitudinal routing material 200 is placed on a bottom surface 16c of the plate-shaped sleeve portions 16C, 16C (see FIG. 22A), and the placed longitudinal routing material 200 is bound and held by binding members 20, 20 such as tape together with the sleeve portions 16C, 16C.

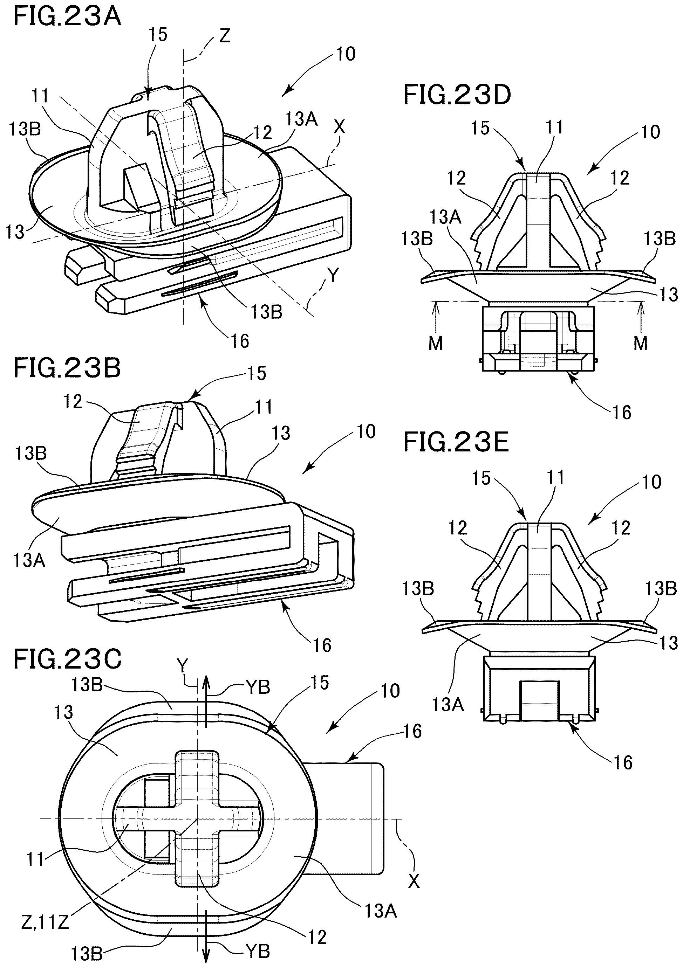

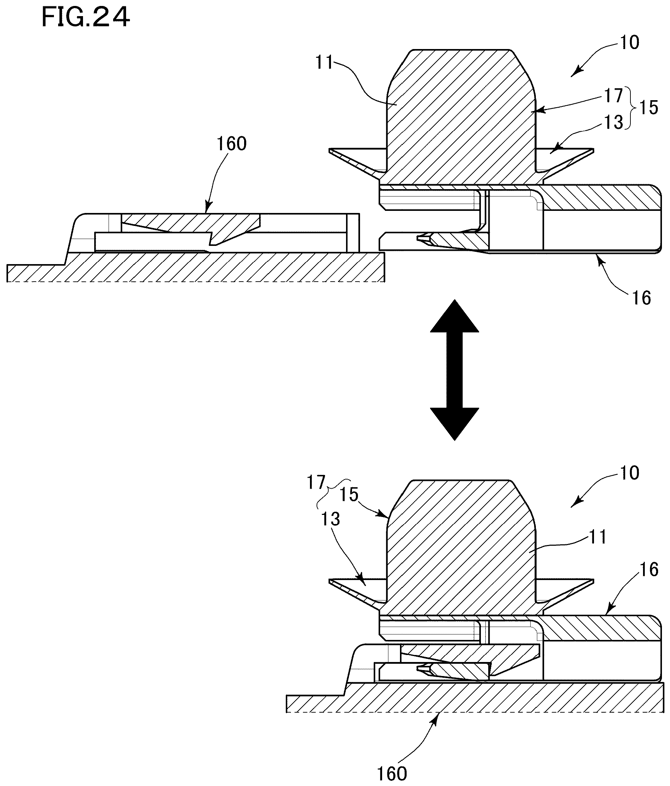

A second modification of the first to fourth embodiments will be described with reference to FIG. 23A to FIG. 23E and FIG. 24.

A contact main portion 13A of a fixing member 10 of the second modification has a substantially elliptical shape whose minor-axis direction is the alignment direction (here, the left-right direction Y) of the paired elastic locking pieces 12, 12, when seen in the direction (up-down direction Z) of the axis 11Z, and bent portions 13B are respectively provided at both ends in the minor-axis direction. In this case, the reinforcing rib 13C can be formed in the same shape as that of any one of the second to fourth embodiments (FIG. 19 to FIG. 21). The bent portion 13B and the reinforcing rib 13C may be formed as in the first embodiment (FIG. 11).

A functional part 16 of the fixing member 10 of the second modification is an attachment-detachment part, and a separate attachment-detachment functional part 160 having a predetermined function can be assembled to and detached from the functional part 16 (see FIG. 24). The assembling structure and assembling method are known, and thus, the detailed description thereof is omitted. Although the entire attachment-detachment functional part 160 is not shown, the attachment-detachment functional part 160 may be a holding part for the longitudinal routing material 200 (e.g., wire harness) as described in the first embodiment and the first modification, may be a connector or the like provided at an end portion of a wiring member, or may be another functional part.

In the first to fourth embodiments and the first and second modifications thereof, the functional part 16 located below the assembly fixation part 15 may be replaced.

For example, in the case of the fixing member 10 of the first embodiment, the assembly fixation part 15 above the B-B cross-section in FIG. 4 may be left, and the functional part 16 below the L-L cross-section of the first modification shown in FIG. 22C may be connected below the assembly fixation part 15, for example, such that the front and the back thereof face in the same direction as or a direction opposite to those of the assembly fixation part 15, or the functional part 16 below the M-M cross-section of the second modification shown in FIG. 23D may be connected below the assembly fixation part 15, for example, such that the front and the back thereof face in the same direction as or a direction opposite to those of the assembly fixation part 15.

In the case of the fixing member 10 of the first modification shown in FIG. 22A to FIG. 22D, the assembly fixation part 15 above the L-L cross-section shown in FIG. 22C may be left, and the functional part 16 below the B-B cross-section of the first embodiment shown in FIG. 4 may be connected below the assembly fixation part 15, for example, such that the front and the back thereof face in the same direction as or a direction opposite to those of the assembly fixation part 15, or the functional part 16 below the M-M cross-section of the second modification shown in FIG. 23D may be connected, for example, such that the front and the back thereof face in the same direction as or a direction opposite to those of the assembly fixation part 15.

In the case of the fixing member 10 of the second modification shown in FIG. 23A to FIG. 23E, the assembly fixation part 15 above the M-M cross-section shown in FIG. 23D may be left, and the functional part 16 below the B-B cross-section of the first embodiment shown in FIG. 4 may be connected below the assembly fixation part 15, for example, such that the front and the back thereof face in the same direction as or a direction opposite to those of the assembly fixation part 15, or the functional part 16 below the L-L cross-section of the first modification shown in FIG. 22C may be connected below the assembly fixation part 15, for example, such that the front and the back thereof face in the same direction as or a direction opposite to those of the assembly fixation part 15.

The orientations of the assembly fixation part 15 and the functional part 16 in different embodiments and modifications when connecting the assembly fixation part 15 and the functional part 16 are not limited to those described above, and the assembly fixation part 15 and the functional part 16 may be connected in orientations different from the above. The functional part 16 may have a different function and shape from the above first embodiment and various modifications described above.

In the various embodiments and modifications described above, a part of the assembly fixation part 15 other than the dish-like contact portion 13 may be replaced. However, in this case, the bent portions 13B, 13B in the dish-like contact portion 13 need to be connected so as to be positioned in a direction that coincides with the alignment direction (here, the left-right direction Y) of the elastic locking pieces 12, 12. The assembly fixation part 15 may have a shape different from that of the various embodiments and modifications described above.

When there are a plurality of elastic locking pieces 12, 12 (the downwardly extending portions 12B) provided around the axis, the bent portions 13B can be formed in the contact main portion 13A, on the sides of the elastic locking piece 12 (the downwardly extending portion 12B), respectively. However, the bent portions 13B need not necessarily be formed so as to correspond to all the elastic locking pieces 12, and it is sufficient that a bent portion 13B corresponding to at least one elastic locking piece 12 is present. Then, the reinforcing rib 13C may be provided to the bent portion 13B.

### DESCRIPTION OF THE REFERENCE CHARACTERS

10 fixing member
11 support column
11Z axis
12 elastic locking piece (elastic locking portion)
12A locking portion
12B downwardly extending portion
13 dish-like contact portion
13A contact main portion
13B bent portion
13C reinforcing rib
13a lower surface of contact main portion 13A
13b lower surface of bent portion 13B
13s upper surface of bent portion 13B
15 assembly fixation part
16 functional part
17 insertion engagement part
18 base portion
100 plate-shaped member
101 through hole
101a inner wall surface of through hole 101 (through hole inner wall surface)
102 surrounding portion of through hole 101 (through hole surrounding portion)
200 longitudinal routing material (wire harness)
300 jig
I insertion direction
X front-back direction (width direction)
Y left-right direction
YB bent portion extending direction
Z up-down direction

## Claims

1. A fixing member (10) for a vehicle, comprising:
a support column (11) extending in an up-down direction (Z);
elastic locking pieces (12,12) each extending from an upper end side to a lower end side of the support column (11); and
a dish-like contact portion (13) including a contact main portion (13A), the contact main portion (13A) having a dish-like shape and radially extending obliquely upward and outward from the lower end side of the support column (11) so as to surround the support column (11), wherein
by inserting the support column (11) and the elastic locking pieces (12,12) into a through hole (101) of a plate-shaped member (100) for a vehicle from the upper end side of the support column (11), the elastic locking pieces (12,12) pass through the through hole (101) with elastic deformation approaching the support column (11), and when the elastic locking pieces (12,12) reach a predetermined engagement depth, the elastic locking pieces (12,12) elastically return, and due to this elastic return, the elastic locking pieces (12,12) lock a surrounding portion (102) of the through hole (101) from a far side in an insertion direction (I) and a distal end having an annular shape of the contact main portion (13A) annularly contacts the surrounding portion (102) of the through hole (101) from a near side in the insertion direction (I), thereby establishing an engagement and fixation state where the plate-shaped member (100) is sandwiched from the far side and the near side in the insertion direction (I),
the elastic locking pieces (12,12) each include a downwardly extending portion (12B) passing through the through hole (101) and extending downward in the engagement and fixation state, and
the dish-like contact portion (13) includes
a bent portion (13B) extending obliquely downward and outward from the distal end of the contact main portion (13A) in a direction that is orthogonal to at least the up-down direction (Z) and that extends from the support column (11) toward the downwardly extending portion (12B), and
a reinforcing rib (13C) formed in a projecting manner at lower surfaces (13a, 13b) of both the contact main portion (13A) and the bent portion (13B), so as to extend across the lower surfaces (13a, 13b).

2. The fixing member (10) for a vehicle according to claim 1, wherein
the reinforcing rib (13C) is formed from the bent portion (13B) to an intermediate position of the contact main portion (13A), and is not formed beyond the intermediate position.

3. The fixing member (10) for a vehicle according to claim 1, comprising
a base portion (18) to which a lower end of the support column (11) and an inner-side lower end of the contact main portion (13A) are coupled, wherein
in the base portion (18), at a connection position where the base portion (18) is connected to the contact main portion (13A), a groove portion (18V) recessed to the support column (11) side is formed on a lower side with respect to the connection position, and
the groove portion (18V) extends in a width direction (X) orthogonal to both the up-down direction (Z) and a direction extending from the support column (11) toward the downwardly extending portion (12B).
